# EUROPÄISCHE PATENTANMELDUNG

(11) **EP 1 895 509 A1**
(43) Veröffentlichungstag der Anmeldung: **05.03.2008**
(21) Anmeldenummer: 07115537.8
(22) Anmeldetag: 03.09.2007
(51) Int. Cl.: G10L 15/22

(54) **Verfahren zur Spracherkennung**

(30) Priorität: 04.09.2006 DE 102006041453
(71) Anmelder: Siemens VDO Automotive AG, 93055 Regensburg (DE)
(72) Erfinder: Hempel, Thomas, 80339 München (DE)

(57) **Zusammenfassung**

Zunächst wird eine voraussichtliche Erkennungsqualität ermittelt, welche die Wahrscheinlichkeit angibt, dass eine Spracheingabe eines Benutzers richtig erkannt wird. Hierzu wird eine Information an den Benutzer ausgegeben. Auf diese Weise kann erfolglosen Spracheingaben vorgebeugt werden, wenn diese etwa aufgrund aktueller akustischer Rahmenbedingungen wenig Erfolg versprechend sind. Einer Frustration des Benutzers wird so entgegen gewirkt. Das Verfahren eignet sich besonders im Kraftfahrzeug.

## Beschreibung

Heutige Spracherkennungssysteme erzielen nur unter bestimmten akustischen Rahmenbedingungen hohe Erkennungsraten. Zu den akustischen Rahmenbedingungen zählen etwa Grundgeräusche, Schallreflexionen der Umgebung, oder auch das Signal-Rauschverhältnis, welches vom verwendeten Mikrofon, der Qualität der Audio-Hardware, etwa einer Soundkarte, dem Abstand des Benutzers zum Mikrofon und der Sprechlautstärke des Benutzers abhängt. Weitere Faktoren, die auf die Güte der Spracherkennung Einfluss nehmen, sind die Breite des zu erkennenden Vokabulars, die Anzahl der zu erkennenden Sprecher, die Gewöhnung der Sprecher an das Spracherkennungssystem sowie das Training des Spracherkennungssystems für die jeweiligen Sprecher.

Unzureichende Erkennungsraten führen zu einer Frustration des Benutzers. Da der Benutzer die technischen Anforderungen des Spracherkennungssystems nicht kennt, und da das menschliche Sprachverstehen verglichen mit Spracherkennungssystemen sehr fehlerrobust ist, ist das Verhalten des Benutzers in der Regel nicht kooperativ genug, um eine hohe Erkennungsrate unter den gegebenen akustischen Rahmenbedingungen zu erzielen.

Um die Erkennungsrate bei ungünstigen akustischen Rahmenbedingungen zu erhöhen, setzen heutige Spracherkennungssysteme geeignete Algorithmen ein, welche Störsignale oder Hall unterdrücken.

Der Erfindung liegt die Aufgabe zugrunde, ein Verfahren zur Spracherkennung anzugeben, welches die Erkennungsrate erhöht und die Kooperation des Benutzers mit dem System verbessert.

Diese Aufgabe wird durch das Verfahren, die Benutzerschnittstelle und das Spracherkennungssystem gemäß den unabhängigen Ansprüchen gelöst. Weitere vorteilhafte Ausführungsformen der Erfindung sind durch die Merkmale der Unteransprüche gekennzeichnet.

Im Folgenden werden Ausführungsbeispiele der Erfindung anhand der Figuren erläutert. Es zeigen:
- Figur 1: eine schematische Sicht des Spracherkennungssystems;
- Figur 2: eine schematische Sicht des Verfahrens zur Spracherkennung.

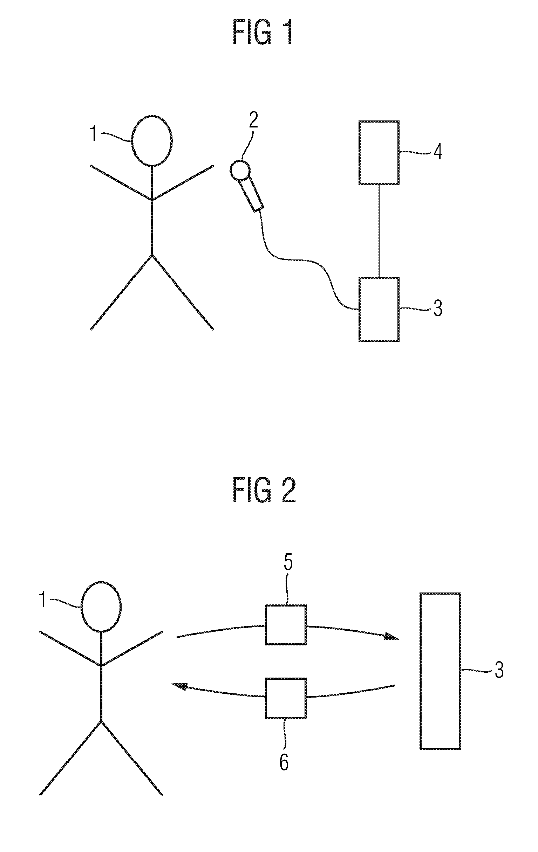

Figur 1 zeigt einen Benutzer 1, welcher über ein Mikrofon 2 Spracheingaben einem Spracherkenner zuführen kann, welcher auf einer Recheneinheit 3 ausgeführt wird. Die Recheneinheit 3 ist mit einem Ausgabegerät 4 verbunden, über welches Informationen an den Benutzer 1 ausgegeben werden können. Bei dem Mikrofon 2 handelt es sich beispielsweise um ein Spracherkennungs-Headset, ein Handmikrofon oder ein Richtmikrofon. Bei der Recheneinheit 3 handelt es sich etwa um einen Personalcomputer, die Recheneinheit eines Mobiltelefons, welches über Spracherkennung verfügt, oder eine Recheneinheit in einem Fahrzeug-Cockpit. Das Ausgabegerät 4 ist etwa ein Bildschirm, ein Head-up-Display, ein LCD-Display, ein Lautsprechersystem oder ein Gerät, welches haptisches Feedback an den Benutzer 1 ausgibt.

Figur 2 zeigt das Verfahren zur Spracherkennung, welches auf dem in Figur 1 gezeigten Spracherkennungssystem abläuft. Ein Benutzer 1 hat die Möglichkeit, eine Spracheingabe 5 einer Recheneinheit 3 zuzuleiten. Die Recheneinheit 3 gibt ihrerseits eine Information 6 an den Benutzer 1 aus. Über die Information 6 erhält der Benutzer 1 unmittelbar eine Rückmeldung über die zum gegenwärtigen Zeitpunkt zu erwartende Erkennungsqualität, d.h. die Wahrscheinlichkeit, dass seine Spracheingabe 5 richtig erkannt wird. Die Information 6 kann ausgegeben werden, bevor der Benutzer 1 eine Spracheingabe 5 getätigt hat. So kann der Benutzer etwa durch die Information 6 darüber informiert werden, dass bei den gegenwärtigen akustischen Rahmenbedingungen die voraussichtliche Erkennungsqualität sehr gering ist. Dies kann etwa bei Störgeräuschen der Fall sein. Umgekehrt kann die Information 5 den Benutzer 1 auch darauf hinweisen, dass die voraussichtliche Erkennungsqualität hoch ist. Im ersten Fall wird es dem Benutzer 1 ermöglicht, von einer zum Scheitern verurteilten Spracheingabe 5 abzusehen, im zweiten Fall erhält der Benutzer 1 den wertvollen Hinweis, dass eine Spracheingabe 5 nun sehr gut möglich ist. Die Information 6 kann visuell, akustisch oder haptisch ausgegeben werden. Als visuelle Ausgabe kommt etwa die Anzeige eines oder mehrerer farbiger Elemente auf einem Bildschirm in Frage, wobei beispielsweise die Farbe Rot schlechte, die Farbe Gelb mittlere und die Farbe Grün eine gute voraussichtliche Erkennungsqualität signalisiert. Proportional zur erwarteten Erkennungsqualität kann auch ein Gütebalken in entsprechender Länge dargestellt werden. Als akustische Ausgabe eignet sich etwa ein Signalton. Dieser kann beispielsweise als Warnton gestaltet sein, wenn die voraussichtliche Erkennungsqualität einen Schwellwert unterschreitet. Der Benutzer 1 kann auch über Sprachausgabe über die gegenwärtige zu erwartende Erkennungsqualität informiert werden.

Das beschriebene Verfahren hat den Vorteil, dass der Benutzer 1 informiert wird, wann er mit dem Spracherkennungssystem erfolgreich interagieren kann. Dies ermöglicht dem Benutzer 1, Spracherkennung als zuverlässige Eingabemodalität zu erfahren. Frustrationen des Benutzers 1 wird entgegengewirkt, da dieser die Spracherkennung nur benutzt, wenn die Wahrscheinlichkeit einer Erkennung hinreichend hoch ist. Die voraussichtliche Erkennungsqualität kann aufgrund aktueller Messwerte etwa der akustischen Rahmenbedingungen ermittelt werden. Hierzu kann etwa das gegenwärtige Signalrauschverhältnis bei der Spracheingabe ausgewertet werden. Weiterhin kann die Umgebungslautstärke als Maß herangezogen werden. Von Relevanz sind im Übrigen auch Störgeräusche, Hall, Schallreflexionen, und Ähnliches. Diese können gemessen, analysiert und bei der Ermittlung der voraussichtlichen Erkennungsqualität berücksichtigt werden. Hierzu kann etwa auf historische Daten, beispielsweise die Erkennungsrate in der Vergangenheit bei vergleichbaren Rahmenbedingungen zurückgegriffen werden, um die gegenwärtige akustische Rahmensituation im Hinblick auf die zu erwartende Erkennungsqualität zu klassifizieren. Die voraussichtliche Erkennungsqualität kann weiterhin mittels der aus der Informatik bekannten Verfahren zum maschinellen Lernen aus den vorliegenden Messdaten erlernt werden. Das Lernverfahren kann beispielsweise mittels eines neuronalen Netzes implementiert werden. Das neuronale Netz wird hierbei mit historischen Daten trainiert, bis das neuronale Netz aus Messwerten der aktuellen akustischen Rahmenbedingungen die voraussichtliche Erkennungsqualität mit hinreichender Genauigkeit schätzen kann. Die akustischen Rahmenbedingungen können kontinuierlich oder in Intervallen zu diskreten Zeitpunkten gemessen und ausgewertet werden.

Zusätzlich zu den aktuellen Werten können Benutzerspezifische historische Messdaten, historische Erkennungsraten sowie Erfahrungswerte bei der Ermittlung der Erkennungsqualität berücksichtigt werden. Dies trägt der Tatsache Rechnung, dass unterschiedliche Benutzer auf unterschiedliche Weise mit dem Spracherkennungssystem interagieren. So fällt bei verschiedenen Benutzern die Artikulation, Sprechgeschwindigkeit und Sprechlautstärke sehr unterschiedlich aus. Auch wird der Mikrofonkopf eines Headsets zur Spracherkennung durch den Benutzer häufig nicht optimal positioniert. Hierdurch ergeben sich starke individuelle Abweichungen. Ist dem Spracherkennungssystem die Identität des Benutzers 1 bekannt und liegen historische Erkennungsraten für diesen Benutzer 1 vor, so können diese Daten bei der Ermittlung der voraussichtlichen Erkennungsqualität berücksichtigt werden. Der Benutzer 1 kann hierbei durch eine Sprechererkennung identifiziert werden. Die Identifikation kann auch im Rahmen einer Fahrzeugpersonalisierung dem Spracherkennungssystem durch den Bordcomputer des Fahrzeugs bereitgestellt werden.

Ein weiterer Faktor, welcher bei der Ermittlung der voraussichtlichen Erkennungsqualität berücksichtigt werden kann, ist der Grad, mit welchem der Benutzer 1 das Spracherkennungssystem bereits auf die Erkennung seiner individuellen Sprechweise trainiert hat, oder auch die Anzahl der Fehleingaben in der Vergangenheit bzw. der damals erforderlichen Korrekturen.

Das Verfahren zur Spracherkennung wird üblicherweise als Computerprogramm implementiert, welches auf der Recheneinheit 3 abläuft. Die Recheneinheit 3 kann hierbei Teil einer Benutzerschnittstelle sein, welche das Spracherkennungssystem mit einbezieht.

Ein möglicher Einsatz eines solchen Spracherkennungssystems liegt im Fahrzeug vor. Gerade im Kraftverkehr können Verkehrsgeräusche, Motorengeräusche, ein Autoradio oder Gespräche der Beifahrer die voraussichtliche Erkennungsqualität vorübergehend stark vermindern. Hier eignet sich der Feedback an den Benutzer besonders, um ihm erfolglose Spracheingabe zu ersparen.

## Patentansprüche

1. Verfahren zur Spracherkennung,
- bei dem eine voraussichtliche Erkennungsqualität ermittelt wird, welche die Wahrscheinlichkeit angibt, dass eine Spracheingabe (5) eines Benutzers (1) richtig erkannt wird,
- bei dem in Abhängigkeit von der voraussichtlichen Erkennungsqualität eine Information (6) an den Benutzer (1) ausgegeben wird.

2. Verfahren nach Anspruch 1,
bei dem die Information (6) visuell ausgegeben wird.

3. Verfahren nach Anspruch 2,
bei dem als Information (6) je nach voraussichtlicher Erkennungsqualität ein oder mehrere visuelle Elemente in unterschiedlichen Farben ausgegeben werden.

4. Verfahren nach Anspruch 2,
bei dem als Information (6) ein Gütebalken ausgegeben wird.

5. Verfahren nach Anspruch 1,
bei dem die Information (6) akustisch ausgegeben wird.

6. Verfahren nach Anspruch 5,
bei dem ein Warnton ausgegeben wird, wenn die voraussichtliche Erkennungsqualität einen vorgegebenen Schwellwert unterschreitet.

7. Verfahren nach Anspruch 1,
bei dem die voraussichtliche Erkennungsqualität aufgrund aktueller und/oder historischer Messwerte akustischer Rahmenbedingungen ermittelt wird.

8. Verfahren nach Anspruch 1,
bei dem die voraussichtliche Erkennungsqualität aufgrund vorausgegangener Eingabeversuche und/oder der Identität des Benutzers (1) ermittelt wird.

9. Benutzerschnittstelle mit Mitteln, um ein Verfahren nach einem der vorangegangenen Ansprüche auszuführen.

10. Spracherkennungssystem mit Mitteln, um ein Verfahren nach einem der Ansprüche 1 bis 8 auszuführen.

11. Spracherkennungssystem nach Anspruch 10, eingesetzt in einem Fahrzeug.
